(19) **Europäisches Patentamt / European Patent Office / Office européen des brevets**

(11) **EP 4 267 914 B1**

(12) # EUROPEAN PATENT SPECIFICATION

(45) Date of publication and mention of the grant of the patent:
**25.02.2026 Bulletin 2026/09**

(21) Application number: **21839635.6**

(22) Date of filing: **21.12.2021**

(51) International Patent Classification (IPC):
**G01C 19/5698** *(2012.01)*

(52) Cooperative Patent Classification (CPC):
**G01C 19/5698**

(86) International application number:
**PCT/GB2021/053392**

(87) International publication number:
**WO 2022/136861 (30.06.2022 Gazette 2022/26)**

(54) **SURFACE ACOUSTIC WAVE GYROSCOPE**

OBERFLÄCHENWELLENGYROSKOP

GYROSCOPE À ONDES ACOUSTIQUES DE SURFACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2020 GB 202020426**

(43) Date of publication of application:
**01.11.2023 Bulletin 2023/44**

(73) Proprietor: **University of Newcastle Upon Tyne Newcastle upon Tyne Tyne and Wear NE1 7RU (GB)**

(72) Inventors:
- **BURDESS, James**
  **Newcastle upon Tyne Tyne and Wear NE1 7RU (GB)**
- **GALLACHER, Barry**
  **Newcastle upon Tyne Tyne and Wear NE1 7RU (GB)**

(74) Representative: **HGF**
**HGF Limited**
**4th Floor, 1 City Square**
**Leeds LS1 2ES (GB)**

(56) References cited:
**GB-A- 2 379 506**

- **JOHARI HOURI ET AL: "Capacitive Bulk Acoustic Wave Silicon Disk Gyroscopes", ELECTRON DEVICES MEETING, 2006. IEDM '06. INTERNATIONAL, 16 April 2007 (2007-04-16), Pi, pages 1 - 4, XP093310499, ISBN: 978-1-4244-0438-4, DOI: 10.1109/ IEDM.2006.346827**
- **JOSE K.A. ET AL: "Surface acoustic wave MEMS gyroscope", WAVE MOTION, vol. 36, no. 4, 1 April 2002 (2002-04-01), NL, pages 367 - 381, XP055905309, ISSN: 0165-2125, Retrieved from the Internet <URL:https://www.sciencedirect. com/science/article/pii/S0165212502000306/ pdfft? md5=5a2b3b6c035df2d80a2528b7fc696d78& pid=1-s2.0-S0165212502000306-main.pdf> [retrieved on 20220325], DOI: 10.1016/ S0165-2125(02)00030-6**

## Description

## Background

MEMS gyroscopes are unable to measure angular rate whilst under linear accelerations in excess of, for example, 20000g. Accelerations of this magnitude are common in smart munitions and missile systems. Current gyroscopes comprise fragile, beam-like, support structures that fail during such high accelerations. Mechanical stops can be used to prevent failure in a MEMS ring gyroscope. However, using such mechanical stops compromises performance such as angular rate measurement capability. Gyroscopes lacking an ability to measure angular rate whilst under linear accelerations in excess of 20000g exist in all shell based geometries and include all ring and cylinder gyroscopes. Jose K.A. et al: "Surface acoustic wave MEMS gyroscope", Wave Motion, vol. 36, no. 4, 1 April 2002, pages 367-381, describes a surface acoustic wave (SAW) MEMS gyroscope comprising an integration of a SAW resonator and a SAW sensor.

Despite the huge investment internationally over the last decade in improving the performance of micro gyroscopic sensors, the challenge of providing angular rate measurement under extreme acceleration remains.

## Brief description of the drawings

Example implementations will now be described by way of example only with reference to the accompanying drawings in which:

figure 1 shows a gyroscope according to example implementations;

figure 2 illustrates operation of gyroscopes according to example implementations;

figure 3 shows a gyroscope according to example implementations;

figure 4 depicts standing surface acoustic waves according to example implementations;

figure 5 illustrates a gyroscope proof mass bearing sets of transducers according to example implementations;

figure 6 shows a gyroscope proof mass bearing sets of transducers according to example implementations; and

figure 7 depicts a gyroscope system according to example implementations. Detailed description of example implementations

## Detailed description of example implementations

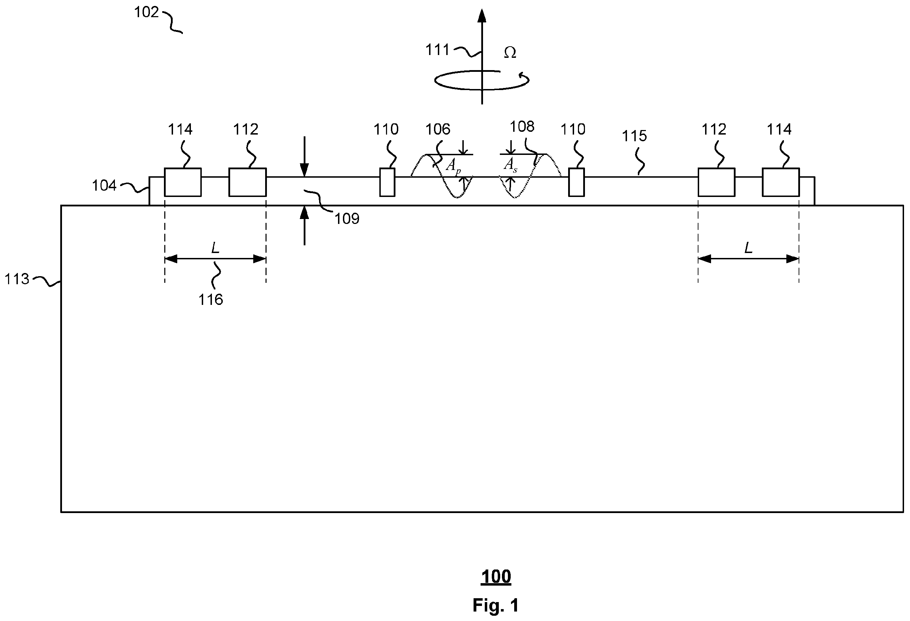

Referring to figure 1, there is shown a view 100 of a gyroscope 102 according to an example implementation. The gyroscope comprises a proof mass 104 for bearing at least a pair of spatially orthogonal surface acoustic waves 106 and 108. The pair of spatially orthogonal surface acoustic waves are merely illustrated schematically. The mass 104 bears at least one or more than one transducer or actuator 110. The one or more than one transducer or actuator 110 is operable to produce the pair of orthogonal surface acoustic waves 106 and 108. The spatially orthogonal surface acoustic waves represent the primary and secondary modes of vibration or oscillation of the mass 104. Example implementations can be realised in which the pair of surface acoustic waves 106 and 108 are Rayleigh surface acoustic waves. Example implementations can be realised in which the pair of surface acoustic waves are standing surface acoustic waves such as, for example, modally degenerate Rayleigh surface acoustic waves.

The mass 104 can be a substantially planar cylindrical or circular mass. Therefore, it will be appreciated that the gyroscope has an axisymmetric construction or design, which ensures modal degeneracy. The axisymmetric construction increases, and, preferably, maximises, gyroscopic coupling when the primary and secondary modes of vibration are degenerate. Example implementations can be realised in which any or all examples herein have cyclic rotational symmetry.

The mass 104 can have a predetermined axial thickness 109 to improve flexural rigidity, $D$, in an intended direction of acceleration 111. Alternatively, example implementations can be realised in which the mass 104 is relatively thin, but sufficiently thick to bear the above surface acoustic waves, while flexural rigidity is provided by a substrate 113 (which may be of the same material as 104) that is sufficiently thick to support the mass 104 while bearing the surface acoustic waves under the accelerations of interest, which can be in excess of 20,000g. Being able to use such a substrate 113 follows from the surface acoustic waves being confined to a single, free or upper, surface 115 of the mass 104. The flexural rigidity, *D*, improves proportionally to the cube of the thickness 109 of the mass 104 or of the thickness of the substrate 113.

The mass 104 also comprises at least one reflector 112. The reflector 112 can comprise a number of reflectors such as, for example, one or more than one reflector. In the illustrated schematic implementation, two reflectors 112 and 114 are depicted. Example implementations can be realised in which the at least one reflector 112 comprises a set or group of reflectors. The set or group of reflectors can comprise a plurality of reflectors. The at least one reflector 112, 114 can span a predetermined radial distance, *L* 116. Example implementations can be realised in which *L* 116 can take values from *X* = *50* wavelengths to *Y* = *150* wavelengths (or in terms of wavelength). It will be appreciated that the Bessel function described below with reference to equations 29 governs the precise placement of the reflectors 112, 114. However, the placement of the reflectors can be expressed in terms of Rayleigh wavelengths $\lambda_R$ since the argument in the Bessel function is $k_R.r$ where $k_R = 2\pi/\lambda_R$ and *r* is the radial coordinate. Furthermore, the value of Y governs the overall Q-factor of the gyroscope or resonator.

Example implementations are arranged such that a reflector is, or a number of reflectors are, positioned at at least one antinode of at least one wave of the pair of surface acoustic waves 106, 108. Example implementations can be realised in which all reflectors are positioned at antinodes of at least one wave of the pair of surface acoustic waves 106,108. Adjacent reflectors, in implementations that use a number of reflectors, are associated with adjacent or consecutive antinodes

The mass 104 can be fabricated from an isotropic or anisotropic material. Examples of the mass 104 can be realised using, for example, a piezoelectric substrate or any other substrate such as, for example, glass, quartz, quartz glass, sapphire or the like.

The transducer or actuator 110 can be substantially cylindrical, circular or be otherwise arcuate. The transducer or actuator 110 can comprise a unitary structure or a number of elements. The elements can be equidistantly circumferentially positioned relative to one another. The elements can be actuated independently, synchronously in phase or with predetermined respective phase relationships. Examples of the transducer or actuator 110 can exhibit cyclic symmetry about the axis 111.

The at least one reflector 112, 114 can be substantially cylindrical or circular. The at least one reflector 112, 114 can comprise a unitary structure or a number of elements. The elements can be equidistantly circumferentially and/or radially positioned relative to one another. For example, implementations can comprise a number of concentric reflectors. Each reflector can have a respective radius or respective radii. Therefore, example implementations can be realised in which the radius of a reflector is uniform or variable. Suitably, example implementations can be realised in which one or more than one reflector has a varying radius. An instant radius of a variable radius reflector can be a function of a property of the material from which the mass 104 is fabricated. For example, the variable radii of a reflector can be a function of the crystal structure of the material from which the mass is fabricated. For example, if the material from which the mass 104 is fabricated comprises a crystal structure that influences the speed of propagation in any given direction of any excited or launched surface acoustic waves, such as the above pair of surface acoustic waves, the radii of the reflector can be varied or otherwise set to accommodate differences in the speed of wave propagation in a manner that results in the standing surface acoustic waves. It will be appreciated that the speed of propagation of any waves launched or excited by the transducer or actuator 110 will vary with direction of propagation in certain materials such as, for example, a piezoelectric material. Therefore, the radii of any given reflectors of the at least one reflector will similarly vary in a manner that results in at least one standing wave, or both standing waves, of the pair of standing waves.

The pair of surface acoustic waves 106 and 108 are degenerate surface acoustic waves. A first wave 106 of the pair of waves 106 and 108 is induced or otherwise created by the transducer or actuator 110. The resulting surface acoustic wave 106 are known as the primary mode of vibration. The rotation of the mass 104 about the axis 111 gives rise to gyroscopic coupling via Coriolis action which excites the second wave 108 of the degenerate pair 106 and 108. The resulting surface wave, excited due to rotation about the axis 111 is the secondary mode of vibration. The secondary mode standing wave is rotated relative to the primary mode standing wave relative to a reference. The primary and secondary modes of vibration are rotationally displaced relative to one another. The reference can comprises one or more than one of the reflectors operable as a sensor.

One or more than one reflector of the at least one reflector can have a predetermined cross-sectional profile. Example implementations can be realised in which the predetermined cross-sectional profile is arranged to influence a predetermined type of reflection. For example, example implementations can be realised in which the profile of one or more of the reflectors is shaped to reflect surface acoustic waves in preference to bulk waves.

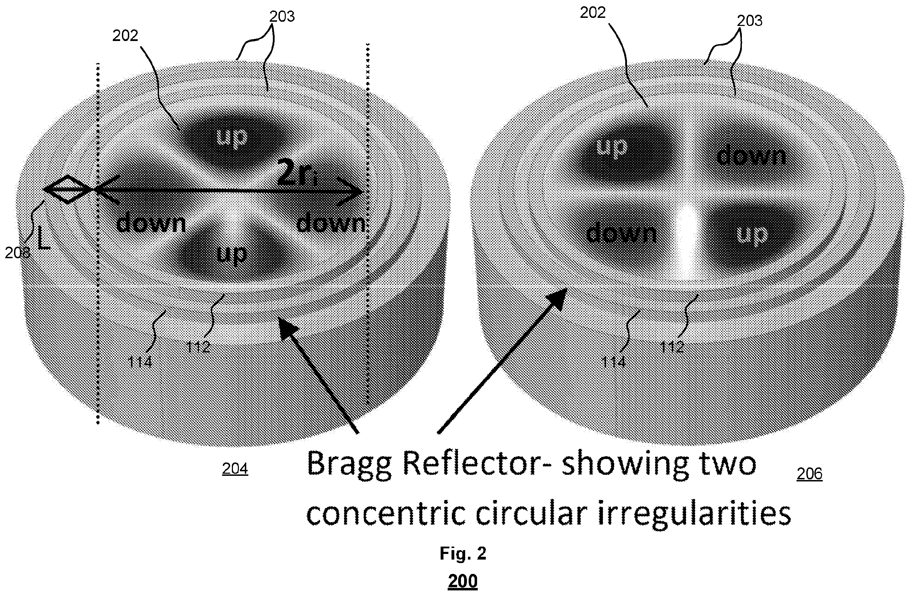

Referring to figure 2, there is shown a pair of views 200 of the mass 104, with or without the additional substrate 113. It will be appreciated that the surface of the mass 104 is semi-infinite and arranged to comprise a circular central region or cavity 202 of radius, $r_i$ . The central region 202 is bounded by a finite set of reflectors 203. The reflectors 203 are examples of the above reflectors 112, 114. The set of reflectors is an example of a set of irregularities of radial width, *L* . Such a set of irregularities or such a finite set of reflectors is an example of an irregularity or reflector region 208.

The surface waves, or a surface wave, generated by the transducer 110 has an amplitude that varies

circumferentially as $e^{in\theta}$, which travels outwardly towards the reflectors. The reflectors 112, 114, 203 are positioned at antinodes of the surface wave. Therefore, example implementations can be realised in which the reflectors are separated by a distance that is, or is of the order of, half a wavelength of an incident surface acoustic wave, which improves the reflection of the incident surface acoustic wave back towards the central region 202. Due to the axisymmetric arrangement, two spatially independent displacement fields, or the standing surface acoustic waves, are produced such that at resonance the standing surface acoustic waves share the same frequency, $\omega$, that is, they are degenerate. Therefore, if a vertical displacement field of mode one varies circumferentially as $\cos(n\theta)$, the displacement field of mode two will vary as $\sin(n\theta)$, as shown by the left-hand and right-hand figures 204 and 206 for the case where $n=2$.

The gyroscope sensitivity can be improved or is influenced by adopting an axis-symmetric form for the mass 104 and cavity 202 formed by the reflectors 203, and generating primary surface acoustic waves in which the radial and vertical displacements vary circumferentially as $\cos(n\theta)$. The cavity 202 and reflectors 203 form a resonator. In such an arrangement, a Coriolis inertial load, caused by the interaction between the primary surface acoustic wave and an applied angular rate about the axis 111, produces a resonant secondary response in which the radial and vertical displacement vary circumferentially as $\sin(n\theta)$. For an angular rate of turn, $\Omega$, about the axis 111 and a set primary amplitude, $A_p$, of the primary surface acoustic wave, the amplitude of the secondary response, $A_s$, of a secondary surface acoustic wave is exponentially proportional to twice the nondimensional radial width $l$ of the irregularity region 208 and is given by

$$\frac{A_S}{A_P} \propto \left(\frac{\Omega}{\omega}\right) e^{2sl}$$

where s is related to the Poisson's ratio v of the medium and nondimensional height $h_0$ of the reflector by the relation $s = \beta(\upsilon)|h_0|$ where $|h_0| \leq 1$. The relation between the Lame parameters and Poisson's ratio v is well-known and is given by $\frac{\mu}{\lambda+2\mu} = \frac{1-2\nu}{2-2\nu}$. For a typical value of Poisson's ratio of $v = 0.2$, for example for fused quartz, then $\beta(v) \cong 0.2$. Example implementations can be realised in which the dimensional height of the reflector $|H_0| = 0.1\lambda_R$ where $\lambda_T$ is the shear wavelength. When realised in fused quartz $s \cong 0.02$.

The value of $n$ will be determined by practical factors that influence, preferably increase or maximise, signal to noise performance of the device when operating as gyroscope. Example implementations can be realised in which the value of $n$ will be 2,3, or 4, which provides an effective compromise between Coriolis coupling, transduction and mitigation against material anisotropy. However, n can take other values. The primary surface acoustic wave is an example of a primary displacement field and the resonant secondary response, or secondary surface acoustic wave, is an example of a secondary displacement field.

By varying the width, $l$, the Gain, $Q$ of the reflector defined by $Q = e^{2sl}$ increases exponentially and a measurable secondary response, $A_s$, can be produced. An example implementation can be realised, for example, using Lead Zirconate Titanate (PZT) electromagnetic transducers operable at 10MHz, having $n=2$, an inner region $r_i \square$ 2mm, $L \square$ $10r_i$ and a primary surface acoustic wavelength $\lambda = 400\mu m$. A gyroscope as described or claimed herein may have at least one or more of the following advantages taken jointly and severally in any and all permutations, the gyroscope will not need to be operated in a vacuum, the gyroscope will be simple to manufacture and the gyroscope will be structurally very robust to withstand the high acceleration loads experienced in, say, guided munitions.

The amplitudes, $A_s$ and $A_p$, can be measured using at least one transducer positioned on the upper surface of the mass 104. Alternatively, or additionally, the amplitudes can be determined using a vibrometer such as a laser vibrometer.

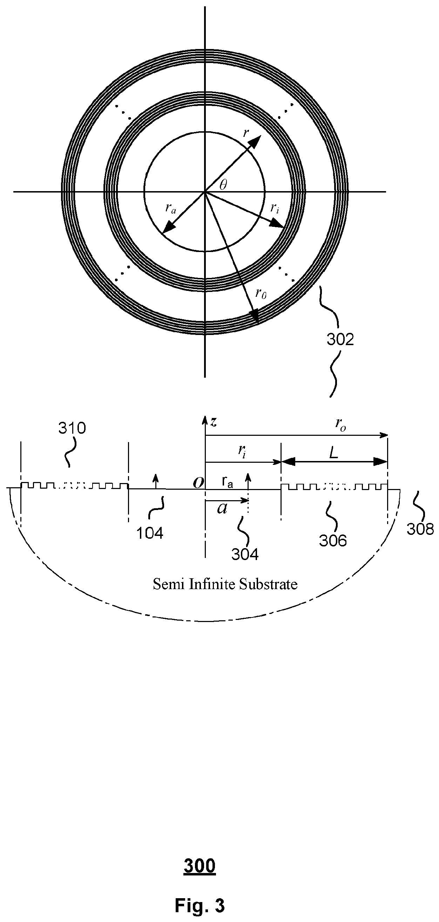

Referring to figure 3, there is shown a view 300 of a gyroscope resonator 302 according to example implementations. The gyroscope resonator 302 is an example of the above described resonator or resonant cavity. The resonator 302 is formed from a half space occupied by an isotropic linear elastic material. The half space is an example of the above-described mass 104. Figure 3 shows that the surface of the half space is divided into three distinct circular regions; namely, load region 304, reflector region 306 and an outer region 308, which is deposed radially outward relative to the reflector region. To describe the surface, let $(R, \theta, Z)$ represent the coordinates of a Polar coordinate system located at point O. Regions 304 and 308 are planar and the surface is defined by the plane $Z = 0$. An annular region, that is, reflector region 306 covers the range $r_i < r < r_o = r_i + L$, which bears a number of reflectors 310. The reflectors 310 are examples of the above described reflectors 112, 114, 203. The reflectors 310 comprise a set of circular concentrically disposed ridges or grooves. The reflectors can be formed by, for example, deposition or etching. The surface of the annular region 306 can be described by

$$Z = H_0 h_0(R) \tag{1}$$

where $H_0$ represents the amplitude of the reflectors or irregularities and $-1 < h_0(R) < 1$ describes the shape of the reflectors or irregularities. As indicated above, one or more than one reflector or irregularity can have a predetermined cross-sectional profile. Example implementations can be realised in which the predetermined cross-sectional profile is arranged to influence a predetermined type of reflection. For example, example implementations can be realised in which the profile of the one or more than one reflector or irregularity is shaped to reflect surface acoustic waves in preference to bulk waves. Example implementations can be realised in which the surface form term $h_0(R)$ is determined by increasing, preferably, maximising, reflections. The form of $h_0(R)$ can be extracted from the solution to a differential equation of the form

$$D\left[ Z_{p_0}^{(q)}\left( k_R r \right) \right] = 0$$ where D is a differential operator governed by the displacement component utilized in the transduction, where the function $Z_p^{(q)}$ is the Hankel function of type q of order $p_o$, $k_R$ is the Rayleigh wavenumber and $r$ is the non-dimensional radial coordinate.

Within the load region 304, a time-periodic, annular, line load of frequency $\omega$, is applied to the surface at radius $r = r_a$. The line load can be applied using the above described transducer or actuator 110. The line load comprises both normal and shear components. The normal and shear components are harmonic in the co-ordinate $\theta$. The line load is the source for generating the above described surface acoustic waves. Example implementations can be realised in which the annular line load is divided into independent circular arcs of arc length $\frac{2\pi}{2p}$ where $p$ is selected depending upon the circumferential mode order $n$. Example implementations can be realised in which $p = n$ with $n = 2,3,4,...$ etc.

While the analysis herein is for an isotropic elastic material, it can be extended to an anisotropic material by modifying the radial position of the line load and reflectors as a function of $\theta$ in order to take account of the in plane variation of the surface wave speed with $\theta$.

It will be appreciated that the displacement $\underline{U}$ of any point in the half space can be expressed in terms of the scalar and vector potentials $\phi$ and $\underline{\psi}$ through the relationship,

$$\underline{U} = \nabla\, \phi_S + \nabla \times \underline{\psi}_V \,, \tag{2}$$

where $\underline{\psi}_V$ is chosen to satisfy

$$\nabla \bullet \underline{\psi}_V = 0 \tag{3}$$

Using these potentials, the equations of motion of the solid, that is, the surface of the mass 104 can be written as

$$\nabla^2 \phi_S = \frac{1}{c_L^2}\frac{\partial^2 \phi_S}{\partial T^2} \text{ and } \nabla^2 \underline{\psi}_V = \frac{1}{c_T^2}\frac{\partial^2 \underline{\psi}_V}{\partial T^2} \tag{4}$$

where $c_L^2 = \dfrac{\lambda + 2\mu}{\rho}$ and $c_T^2 = \dfrac{\mu}{\rho}$ determine the dilatational and shear waves speeds respectively as functions of the Lame constants $(\lambda, \mu)$, wherein $\lambda$ is the first parameter of Lame, $\mu$ is the transverse elasticity module or second parameter of Lame, $\rho$ is the material density, and $T$ is time period of the induced standing wave.

Dimensionless space, time and stress ($T_{Vk}$) variables are now introduced by scaling time and length using the frequency $\omega$ and the wave number $k = c_T / \omega$ and stress using the material parameter $\mu$, which is the above described Lame second parameter, which gives the following variables

$t = \omega T$, $(r, z) = k(R, Z)$, $\ell = kL$, $a = kR_a$, $\underline{u} = k\underline{U}$, $(\phi, \underline{\psi}) = k^2(\phi_S, \underline{\psi}_V)$, $\varepsilon = kH_0$ and $\sigma_{Vk} = T_{Vk} / \mu$.

wherein

$t$ is dimensionless time;

$T$ is time;

($r$,$z$) are dimensionless radial and vertical displacements;

$k(R, Z)$ is the shear wave number;

$\ell$ is a dimensionless radial width spanned by the irregularities;;

$L$ is the radial width spanned by the irregularities;

$a$ is nondimensional radius of the line load, that is, the one or more than one transducer or actuator for exciting the first surface acoustic wave;

$R_a$ is the radius of the line load, that is, the one or more than one transducer or actuator for exciting the first surface acoustic wave;

u is the nondimensional displacement vector;

($\phi$, $\psi$) are the nondimensional scalar and vector displacement potentials;

($\phi_s$, $\underline{\psi_v}$) are the scalar and vector displacement potentials;

$\varepsilon$ is a nondimensional parameter as is defined by $\varepsilon = kH_0$ ;

$H_0$ is the dimensional height of the surface irregularities have the same height; and

$\sigma_{v\kappa}$ is the nondimensional stress component.

Example implementations can be realised in which the surface irregularities, that is, the reflectors, all have the same height. However, example implementations can also be realised in which the one or more than one surface irregularity has a different height compared to one or more than one other surface irregularity. Example implementations can be realised in which the height of the surface irregularities is at least two orders of magnitude smaller than the shear wave wavelength, $\lambda_T = 2\pi/k$ of the first surface acoustic wave. In which case $\varepsilon \approx 0.01$.
Writing $\phi$ and $\underline{\psi}$ in the polar form gives:

$$\phi = \Phi(r,z)e^{i(n\theta+t)} \text{ and } \underline{\psi} = \left(i\Psi_r(r,z),\ \Psi_\theta(r,z),\ i\Psi_z(r,z)\right)e^{i(n\theta+t)}, \tag{5}$$

where the integer n represents the circumferential nodal order assigned to the motion, that is, the primary surface acoustic wave or primary field displacement of the first surface acoustic wave.

Substituting

$$\Psi_r = \frac{H_1+H_2}{2} \text{ and } \Psi_\theta = \frac{H_1-H_2}{2}, \tag{6}$$

and inserting (5) and (6) into (3) and (4) allows the equations of motion of the resonator, that is the mass 104, and the divergence constraint as normal in the Helmholtz decomposition of the displacement field, to be rewritten:

$$L_n \Phi + \frac{\partial^2 \Phi}{\partial z^2} + h^2 \Phi = 0$$

$$L_{n+1} H_1 + \frac{\partial^2 H_1}{\partial z^2} + H_1 = 0$$

$$L_{n-1} H_2 + \frac{\partial^2 H_2}{\partial z^2} + H_2 = 0 \qquad (7)$$

$$L_n \Psi_z + \frac{\partial^2 \Psi_z}{\partial z^2} + \Psi_z = 0$$

and

$$\frac{\partial H_1}{\partial r} + \frac{(n+1)}{r} H_1 + \frac{\partial H_2}{\partial r} - \frac{(n-1)}{r} H_2 + 2 \frac{\partial \Psi_Z}{\partial z} = 0 ,$$

where $\quad h = \dfrac{c_T}{c_L}$ ,

$L_n$ is the differential operator $L_n = \dfrac{\partial^2}{\partial r^2} + \dfrac{1}{r} \dfrac{\partial}{\partial r} - \dfrac{n^2}{r^2}$ ,

$\Psi_r$ and $\psi_\theta$ are radial and tangential potential functions as defined by equation (6);
$H_1$ is a potential function as defined by equation (6);
$H_2$ is potential function as defined by equation (6),

The expressions for the displacements, i.e. $(u_r, u_\theta, u_z)$, expressed in polar coordinates, can be written in terms of the quantities $\phi$, $H_1$, $H_2$ and $\Psi_z$ .

It will be appreciated that the solution becomes significantly affected by the presence of the grooves when the roughened region (L), that is, the reflector or irregularity region, is large and when the spacing between adjacent grooves, that is, adjacent irregularities or reflectors, becomes close to half that of the wavelength of the incoming surface wave.

*Solution to the unforced problem:*

The homogenous solution to the equations of motion described by equations (7) is given by

$$\Phi^{(0)} = (A_1(\eta,\xi) Z_n^{(1)}(k_R r) + A_2(\eta,\xi) Z_n^{(2)}(k_R r)) e^{\beta_1 z} ,$$

$$H_1^{(0)} = -(B_1(\eta,\xi) Z_{n+1}^{(1)}(k_R r) + B_2(\eta,\xi) Z_{n+1}^{(2)}(k_R r)) e^{\beta_2 z} , \qquad (14)$$

$$H_2^{(0)} = -(C_1(\eta,\xi) Z_{n-1}^{(1)}(k_R r) + C_2(\eta,\xi) Z_{n-1}^{(2)}(k_R r)) e^{\beta_2 z} ,$$

and

$$\Psi_z^{(0)} = -(D_1(\eta,\xi)Z_n^{(1)}(k_R r) + D_2(\eta,\xi)Z_n^{(2)}(k_R r))e^{\beta_2 z}.$$

where A,B,C,D are functions determined by the boundary conditions and the divergence condition; $k_R$ is the Rayleigh wave number, and

$(Z_n^{(1)}, Z_n^{(2)})$ are $n^{th}$ order Hankel functions of the first and second kind respectively.

The exponents $\beta_1$ and $\beta_2$ are determined from the relationship

$$k_R^2 = \beta_1^2 + h^2 = \beta_2^2 + 1 \qquad (15)$$

and example implementations provide for exponents $\beta_1$ and $\beta_2$ being positive to satisfy the desire that the response decays into the body of the mass 104, ($z < 0$). The relationship between the functions $A_1(\eta,\xi)$ to $D_2(\eta,\xi)$ can be found from the solutions to:

$$(B_j - C_j)k_R - 2\beta_2 D_j = 0,$$

and

$$\begin{bmatrix} k_R^2 + \beta_2^2 & -k_R\beta_2 & -k_R\beta_2 \\ -2k_R\beta_1 & k_R^2 & \beta_2^2 \\ 2k_R\beta_1 & -\beta_2^2 & -k_R^2 \end{bmatrix} \begin{bmatrix} A_j \\ B_j \\ C_j \end{bmatrix} = \underline{0}, \ j = 1,2. \qquad (17)$$

Equation (17) yields the result

$$D(\eta,0)_j = 0, \ B(\eta,0)_j = C(\eta,0)_j = pA(\eta,0)_j \qquad (18)$$

and

$$pq = 1 \qquad (19)$$

where the parameters $p$ and $q$ are defined by,

$$p = \frac{2k_R\beta_1}{k_R^2 + \beta_2^2} \ \text{and} \ q = \frac{2k_R\beta_2}{k_R^2 + \beta_2^2}. \qquad (20)$$

If equations (15) and (20) are substituted into (19), an equation for the wave number $k_R$ is produced, which is associated with the propagation of a Rayleigh surface wave.

*Solution to the forced problem:*

For the case of the applied load at $r = a$, the particular solution, designated by the subscript $p$, is derived by first taking the Hankel transform of the equations of motion (7), equation (3) and the boundary conditions (8), rearranged as $\overline{\sigma}_{zz} = F_z\delta(r - a)$, $\overline{\sigma}_{rz}, -\overline{\sigma}_{z\theta} = (F_r - F_\theta)\delta(r - a)$ and $\overline{\sigma}_{rz}, + \overline{\sigma}_{z\theta} = (F_r + F_\theta)\delta(r - a)$. With the notation

$$A(s)e^{\gamma_1 z} = \int_0^\infty r\Phi_p(r,z)J_n(sr)dr$$

$$B(s)e^{\gamma_2 z} = -\int_0^\infty rH_{1p}(r,z)J_{n+1}(sr)dr \tag{21}$$

$$C(s)e^{\gamma_2 z} = -\int_0^\infty rH_{2p}(r,z)J_{n-1}(sr)dr$$

$$D(s)e^{\gamma_2 z} = -\int_0^\infty r\Psi_{zp}(r,z)J_n(sr)dr \, ,$$

the transformation of (3), (7) and (8) gives

$$\gamma_1 = \sqrt{s^2 - h^2} > 0 \, , \tag{22}$$

$$\gamma_2 = \sqrt{s^2 - k^2} > 0 \, ,$$

and [00111]

$$\begin{bmatrix} 0 & -s & s & 2\gamma_2 \\ 2s^2 - k^2 & -s\gamma_2 & -s\gamma_2 & 0 \\ -2s\gamma_1 & s^2 & \gamma_2^2 & 0 \\ 2s\gamma_1 & -\gamma_2^2 & -s^2 & 0 \end{bmatrix} \begin{bmatrix} A \\ B \\ C \\ D \end{bmatrix} = \begin{bmatrix} 0 \\ (1/\mu)aF_z J_n(as) \\ (1/\mu)a(F_r - F_\theta)J_{n+1}(as) \\ (1/\mu)a(F_r + F_\theta)J_{n-1}(as) \end{bmatrix} \tag{23}$$

where from

$$\begin{bmatrix} A \\ B \\ C \\ D \end{bmatrix} = \frac{aF_z J_n(as)}{\mu M(s)} \begin{bmatrix} s^2 + \gamma_2^2 \\ 2s\gamma_1 \\ 2s\gamma_1 \\ 0 \end{bmatrix} + \frac{a(F_r - F_\theta)J_{n+1}(as)}{\mu M(s)} \begin{bmatrix} s\gamma_2 \\ -\dfrac{s^2}{k^2}(-2s^2 + k^2 + 2\gamma_1\gamma_2) \\ \dfrac{\gamma_2}{k^2}(-2\gamma_2 s^2 + \gamma_2 k^2 + 2\gamma_1 s^2) \\ \dfrac{sM(s)}{2\gamma_2 k^2} \end{bmatrix}$$

$$+ \frac{a(F_r + F_\theta)J_{n-1}(as)}{\mu M(s)} \begin{bmatrix} -s\gamma_2 \\ -\dfrac{\gamma_2}{k^2}(-2\gamma_2 s^2 + \gamma_2 k^2 + 2\gamma_1 s^2) \\ \dfrac{s^2}{k^2}(-2s^2 + k^2 + 2\gamma_1\gamma_2) \\ \dfrac{sM(s)}{2\gamma_2 k^2} \end{bmatrix} , \tag{24}$$

and

$$M(s) = (k^2 - 2s^2)^2 - 4s^2\gamma_1\gamma_2. \tag{25}$$

By using equations (19) and (20), it can be seen that $M(k_R) = 0$. This highlights that the resonant solution to the forced problem is governed by Rayleigh waves as in the unforced case.

Using (24) and the Hankel inversion formula, it follows that

$$\Phi_p(r,0) = \int_0^\infty sA(s)J_n(sr)ds$$

$$H_{1p}(r,0) = -\int_0^\infty sB(s)J_{n+1}(sr)ds$$

$$\tag{26}$$

$$H_{2p}(r,0) = -\int_0^\infty sC(s)J_{n-1}(sr)ds$$

$$\Psi_{zp}(r,0) = -\int_0^\infty sD(s)J_n(sr)ds$$

Substituting (24) and (25) into (26) defines the particular integrals to be evaluated to give the contribution made by the surface wave to the overall motion. Example implementations can be realised using the method of contour integration by showing that the surface wave contribution can be obtained from terms that are given by the principal part of integrals of the type:

$$I_{\kappa,\nu}(r) = \int_0^\infty \frac{G(s)}{M(s)} J_\kappa(as)J_\nu(rs)ds . \tag{27}$$

Performing this integration shows that the surface wave contribution is related to the term

$$I_{\kappa,\nu}(r) = \begin{cases} -i\pi \dfrac{G(k_R)}{M'(k_R)} Z_\nu^{(2)}(k_R r)J_\kappa(k_R a) & ,r > a \\[4mm] -i\pi \dfrac{G(k_R)}{M'(k_R)} Z_\kappa^{(2)}(k_R a)J_\nu(k_R r) & ,r < a \end{cases} \tag{28}$$

In equation (28), $\kappa$ and $\nu$ are integers, $G(s)$ is one of the functions shown in the first three rows of (24) and $M'$ is the derivative of $M$ with respect to $s$, evaluated at $s = k_R$. It will be appreciated that G(s) is a function that depends on which element of the matrix of solutions is being determined, and M(s) is recognized as leading to a Rayleigh wave solution as seen in the unforced problem.

To proceed further with the analysis it is convenient, without incurring loss of generality, to limit the discussion to the case where only a normal load, is applied to the surface (i.e. $F_r = F_\theta = 0$). For this situation it follows, after using (24) to (28), that the surface wave motion is given by,

$$\Phi_p(r,z) = A_0 J_n(k_R a) Z_n^{(2)}(k_R r) e^{\beta_1 z}$$

$$H_{p1}(r,z) = -p A_0 J_n(k_R a) Z_{n+1}^{(2)}(k_R r) e^{\beta_2 z}$$

$$H_{p2}(r,z) = -p A_0 J_n(k_R a) Z_{n-1}^{(2)}(k_R r) e^{\beta_2 z}$$ , for $r > a$ $\qquad$ (29)

$$\Psi_{pz}(r,z) = 0$$

and

$$\Phi(r,z) = A_0 Z_n^{(2)}(k_R a) J_n(k_R r) e^{\beta_1 z}$$

$$H_1(r,z) = -p A_0 Z_n^{(2)}(k_R a) J_{n+1}(k_R r) e^{\beta_2 z}$$

$$H_2(r,z) = -p A_0 Z_n^{(2)}(k_R a) J_{n-1}(k_R r) e^{\beta_2 z}$$ , for $r < a$ ,

$$\Psi_z(r,z) = 0$$

where

$$A_0 = -i\pi \frac{a F_z}{\mu} \frac{k_R (k_R^2 + \beta_2^2)}{M'(k_R)} .$$

It is possible to interpret (29) by substituting it into equations (5) and (6). For $r < a$ the response is of the form of a standing wave such as at least one, or both, of the above described first and second surface acoustic standing waves.

When $r > a$, the asymptotic form of the Hankel function, given by $Z_n^{(2)}(k_R r) \sim \sqrt{\dfrac{2}{\pi k_R r}} e^{-i(k_R r - \pi/4 - n\pi/2)}$ , shows that response can be identified as a radially expanding travelling wave, of speed $V_R = \omega/k_R$ .

By suitably interpreting the results of equations (14) and (29), the form of the first order solution for the different surface regions can now be constructed.

For the region $r < r_i$, the singularity in the Hankel functions at $r = 0$ must be removed and the solution takes the form

$$\Phi^{(0)}(r,z) = A_1(\eta,\xi) J_n(k_R r) e^{\beta_1 z} + \Phi_p(r,z)$$

$$H_1^{(0)}(r,z) = -B_1(\eta,\xi) J_{n+1}(k_R r) e^{\beta_2 z} + H_{1p}(r,z)$$

$$H_2^{(0)}(r,z) = -C_1(\eta,\xi) J_{n-1}(k_R r) e^{\beta_2 z} + H_{2p}(r,z) \qquad (30)$$

$$\Psi_z^{(0)}(r,z) = -D_1(\eta,\xi) J_n(k_R r) e^{\beta_2 z}$$

Within the irregular or roughened region 208, $r_i < r < r_o$, the singularity problem in the Hankel function does not occur and the solution, which contains both the free surface and the particular solutions, can be written without loss of generality as,

$$\Phi^{(0)}(r,z) = (A_2(\eta,\xi)Z_n^{(1)}(k_R r) + A_3(\eta,\xi)Z_n^{(2)}(k_R r))e^{\beta_1 z}$$

$$H_1^{(0)}(r,z) = -(B_2(\eta,\xi)Z_{n+1}^{(1)}(k_R r) + B_3(\eta,\xi)Z_{n+1}^{(2)}(k_R r))e^{\beta_2 z}$$

$$H_2^{(0)}(r,z) = -(C_2(\eta,\xi)Z_{n-1}^{(1)}(k_R r) + C_3(\eta,\xi)Z_{n-1}^{(2)}(k_R r))e^{\beta_2 z} \quad (31)$$

$$\Psi_z^{(0)}(r,z) = -(D_2(\eta,\xi)Z_{n-1}^{(1)}(k_R r) + D_3(\eta,\xi)Z_{n-1}^{(2)}(k_R r))e^{\beta_2 z}$$

Beyond $r = r_o$ the solution represents an outwardly propagating wave and this condition can only be met by retaining terms of the type $Z_v^{(2)}$ ($v = n-1, n, n+1$) in the solution. For this region the solution is thus of the form:

$$\Phi^{(0)}(r,z) = A_4(\eta,\xi)Z_n^{(2)}(k_R r)e^{\beta_1 z}$$

$$H_1^{(0)}(r,z) = -B_4(\eta,\xi)Z_{n+1}^{(2)}(k_R r)e^{\beta_2 z}$$

$$H_2^{(0)}(r,z) = -C_4(\eta,\xi)Z_{n-1}^{(2)}(k_R r)e^{\beta_2 z} \quad (32)$$

$$\Psi_z^{(0)}(r,z) = -D_4(\eta,\xi)Z_{n-1}^{(2)}(k_R r)e^{\beta_2 z}$$

Equation (31) can be used to determine the radial locations of the reflectors and the line load for the normal load case. The general load case can be determined by considering equation (29). For the normal case, the reflector radial positions are given by maximizing the response from the appropriate displacement component. For example, for the radial displacement u the reflector and line locations can be obtained by solving $\frac{\partial u}{\partial r} = 0$. In general, this will involve finding the solution to a differential equation of the form $D\left[Z_{P_0}^{(q)}(k_R r)\right] = 0$ where $D$ is a differential operator governed by the displacement component utilized in the transduction.

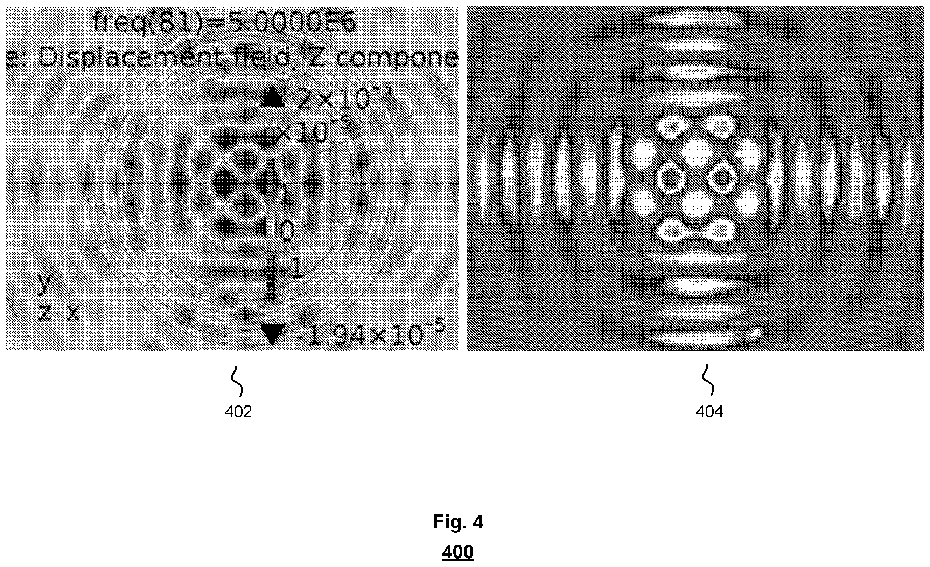

Referring to figure 4, there is shown a view 400 of a simulation 402 and experimental 404 results of a mass 104 bearing first and second orthogonal Rayleigh surface acoustic waves that are degenerate and coupled due to motion about an axis normal to the plane of the figure (not shown). The standing wave frequency in the simulation 402 was 5 MHz with maximum and minimum antinode amplitudes of $2.10^{-5}$m and $-1.94.10^{-5}$m. The excitation line load in figure 4 was split into 4 circumferential sections. The gaps between adjacent sections is clearly seen as node lines in the standing wave pattern. It can be appreciated that the simulation matches the experimental results well. The experimental results were obtained by laser vibrometry sensitive to the displacement component normal to the figure.

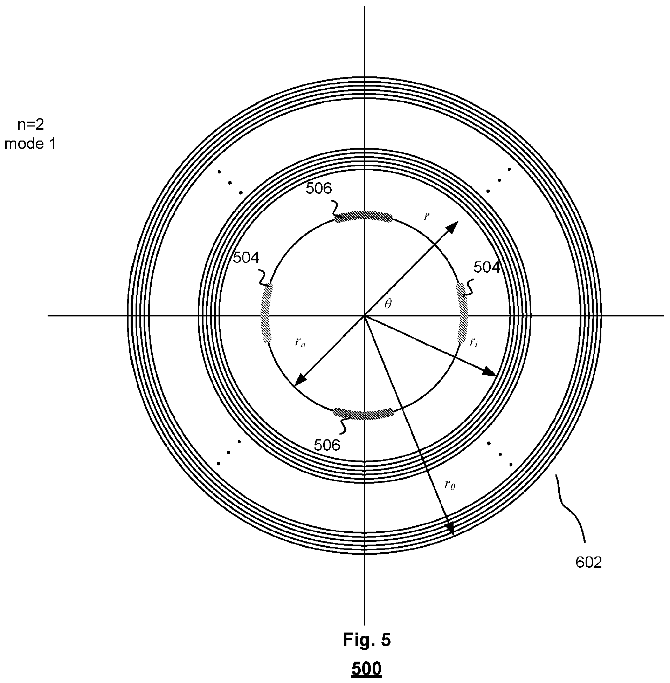

Referring to figure 5, there is shown a view 500 of the mass 502 bearing first 504 and second 506 sets of transducers or actuators for the case where $n = 2$. The proof mass 502 is an example of any proof mass described herein such as, for example, any of the above described proof masses 104, 204, 206, 302. The transducers or actuators 504, 506 can be examples of the above described transducers or actuators 110. The first set of transducers or actuators 504 can be arranged to excite mode one of the mass 104. The transducers or actuators 504 are disposed diagonally opposite one another. In the example illustrated, the transducers or actuators 504 are positioned at 0° and 180°. The second set of transducers or actuators 506 are also disposed diagonally opposite one another. In the example depicted, the transducers or actuators 506 are positioned at 90° and 270°. Example implementations can be realised in which the first 504 and second 506 sets of transducers or actuators are disposed at a predetermined position or angular position relative to one another. In the example shown, the first 504 and second 506 sets of transducers or actuators are orthogonal to one another in physical space yet are associated with one mode of the degenerate pair of wave modes of circumferential order $n=2$. The set 504 is used to excite one mode of the $n=2$ degenerate pair. This is referred to as the primary mode of the gyroscope. The second set 506 can be used to detect the primary mode displacement or velocity. In typical rate gyroscope operation, the primary mode and its associated electrodes may be configured in closed loop control whereby the vibration amplitude of the primary mode is maintained constant.

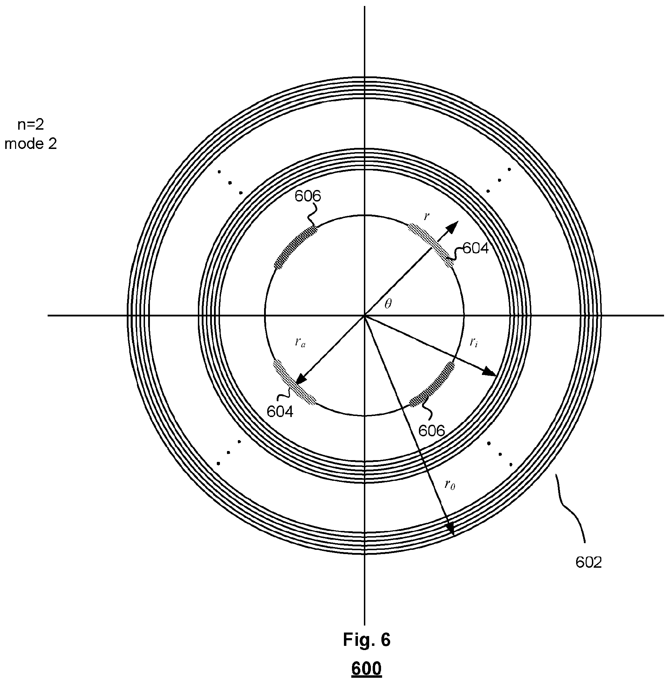

Referring to figure 6, there is shown a view 600 of a mass 602 bearing first 604 and second 606 sets of transducers or actuators for the case where $n = 2$. The mass 602 is an example of the above described mass 104. The transducers or actuators 604, 606 can be examples of the above described transducers of actuators 110. In the example illustrated, the transducers or actuators 604 are positioned at 45° and 225° . The second set of transducers or actuators 606 are also disposed diagonally opposite one another. In the example depicted, the transducers or actuators 606 are positioned at 135° and 315°. Example implementations can be realised in which the first 604 and second 606 sets of transducers or actuators are disposed at a predetermined position or angular position relative to one another. In the example shown, the first 604 and second 606 sets of transducers or actuators are orthogonal to one another in physical space yet are associated with the secondary mode of the gyroscope, that is, a second or secondary mode of the degenerate pair of wave mode of circumferential order $n=2$, mode 2. Coriolis coupling due an angular rate applied about the axis normal to the figure causes excitation of this secondary mode of the gyroscope. Detection of the secondary mode and hence measures of the applied angular rate are obtained through employing the sets 604 or 606 either separately or in combination. The relative phase between signals produced from either 604 or 606 of 90° can be accounted for in the standard detection circuitry. Open loop operation detects the amplitude of the secondary mode's displacement or velocity. Forced feedback control where control forces are applied to 604 or 606 can be used to null the secondary mode vibration to improve measurement bandwidth and is standard practice in rate gyroscope devices. In open loop operation, the detected amplitude is proportional to the angular velocity applied about the axis normal to the plane of the figure.

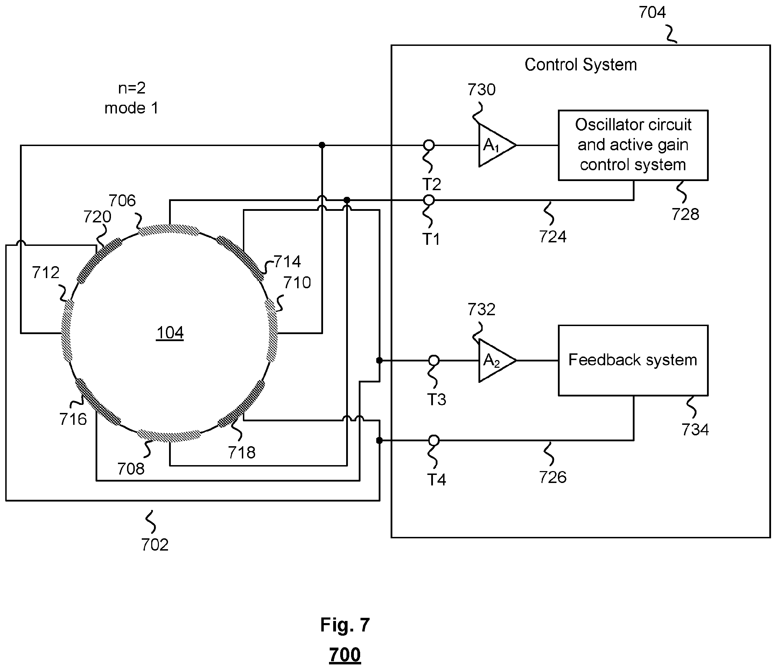

Referring to figure 7, there is shown a view 700 of a gyroscope 702 according to any implementation described or claimed herein in conjunction with a control system 704. The gyroscope 702 is an example of any of the above described gyroscopes.

The gyroscope 702 comprises at least a first set of actuators or transducers 706 to 712 and at least a second set of actuators or transducers 714 to 720. An example implementation can be realised in which the gyroscope 702 comprises all eight actuators or transducers 706 to 720. The actuators or transducers are deposited on the proof mass 104. The actuators or transducers are examples of the above described actuators or transducers 110.

The control system 704 is arranged to generate control signals 724 and 726 to drive transducers or actuators. The actuators are electrically coupled in pairs. It can be appreciated that actuators or transducers 706 and 708 are electrically coupled to form a terminal T1. Actuators or transducers 710 and 712 are electrically coupled to form a terminal T2.

A drive signal is applied to the terminal T1 by a signal generator 728. The signal generator 728 can comprise an oscillator circuit and an active gain control system that generator and influence the drive signal. The drive signal excites the above described modes of oscillation, that is, the drive signals generate the above standing surface acoustic wave. The drive signal can be any drive signal that induces the above described standing surface acoustic waves. Example implementations use drive signals having a fundamental frequency corresponding to the resonant frequency of the cavity.

In response to applying the drive signal to terminal T1, the actuators or transducers cause surface acoustic waves to be generated in the surface of the proof mass 104. The surface acoustic waves actuate or influence actuators or transducers 710 and 712, which produce a feedback signal at terminal T2. The feedback signal at terminal T2 can be amplified by an amplifier 730. The feedback signal is used by the active gain control system 728 to control the drive signal at terminal T1, which has the effect of driving the proof mass to oscillate according to a respective resonant mode in which the above described standing surface acoustic waves exist.

Actuators or transducers 714 and 716 are also provide a feedback signal to a terminal T3. In the absence of rotation or rate of turn about the axis 111 of the proof mass 104, the signal at terminal T3 is zero, which follows from the actuators or transducers 714 and 716 being positioned at the above described nodes of the standing surface acoustic wave corresponding to the primary mode of the gyroscope.

However, if the proof mass 104 is rotated about the axis 111, the standing surface acoustic wave corresponding to the secondary mode of the gyroscope is excited due to the Coriolis effect which, in turn, leads to actuators or transducers 714 and 716 producing respective outputs that manifest as a signal at terminal T3. The signal at terminal T3 can be amplified using an amplifier 732. This signal provides an open-loop measure of the rotation rate. Alternatively, the signal can be used as a feedback signal and used to drive terminal T4 using control signal 726 generated by a feedback or signal conditioning system 734. Terminal T4 is electrically coupled to actuators or electrodes 718 and 720. The feedback system 734 is arranged to vary the control signal 726 so that the signal at terminal T3 is zero. When the signal at terminal T3 is zero or a near-null value, the control signal 726 is indicative of the rate of turn of the proof mass 104 about the axis 111, that is, control signal 726 is indicative of the angular velocity of the proof mass 104. The angular velocity can be derived from

$$\frac{A_s}{A_p} = \left(\frac{\Omega}{\omega}\right) K(n) e^{2sl}$$ as indicated above, where $K(n)$ is factor determined by the precise geometrical configuration and is referred to as the Bryan factor. It will be appreciated that example implementations can be realised in which $A_p$ is known, and, therefore, the amplitude $A_s$ is proportional to the angular rate.

Although example implementations have been described with reference to the surface acoustic waves being Rayleigh waves, example implementations are not limited to such arrangements. Example implementations can be realised that use other types of surface acoustic waves such as, for example, Love waves.

**Claims**

1. A gyroscope (100) comprising:

   a. a cyclic symmetric proof mass (104) about an axis (111) comprising concentric circular reflectors that define a cavity (202) for bearing, on a cavity surface, spatially orthogonal polar primary and secondary modes of vibration that become degeneratively coupled at a shared resonant frequency in response to rotation about the axis (111) of the proof mass (104);
   b. at least one actuator (110) for inducing a primary polar surface acoustic wave of circumferential order n associated with the primary mode on the cavity surface; and
   c. at least one sensor for sensing a secondary polar surface acoustic wave of circumferential order n associated with the secondary mode on the cavity surface.

   *Proof mass aspects*

2. A gyroscope (100) as claimed in any preceding claim, in which the proof mass (104) has a predetermined axial depth (109) providing at least a predetermined flexural rigidity in a direction of the axis (111).

3. A gyroscope (100) as claimed in any preceding claim, in which the proof mass (104) is mounted on a substrate (113) that has a predetermined axial depth (109) providing at least a predetermined flexural rigidity in a direction of the axis (111).

4. A gyroscope (100) as claimed in any of claims 1 to 3, in which the proof mass (104) is circular.
   *Wave aspects*

5. A gyroscope (100) as claimed in any preceding claim, in which the at least one actuator (110) for inducing the a primary surface acoustic wave (106) associated with the primary mode is arranged to induce a Raleigh surface acoustic wave.

6. A gyroscope (100) as claimed in any preceding claim, in which at least one of the primary or secondary surface acoustic waves (106, 108) forms a standing surface acoustic wave.
   *Reflectors*

7. A gyroscope (100) as claimed in any preceding claim comprising at least one reflector (112) arranged to reflect at least the primary surface acoustic wave (106) to form a standing surface acoustic wave associated with the primary mode.

8. A gyroscope (100) as claimed in claim 7, in which the at least one reflector (112) is disposed radially outwardly relative to the at least one actuator (110) to reflect at least the primary surface acoustic wave (106) radially inwardly.

9. A gyroscope (100) as claimed in claim 8, in which the at least one reflector (112) is disposed radially outwardly relative to the at least one actuator (110) to reflect at least the secondary surface acoustic wave (108) radially inwardly.
   *Variable radii reflectors*

10. A gyroscope (100) as claimed in any of claims 7 to 9, in which the at least one reflector (112) comprises at least one arcuate reflector.

11. A gyroscope (100) as claimed in claim 10, in which the at least one arcuate reflector comprises a variable radius.

12. A gyroscope (100) as claimed in claim 11, in which the variable radius varies with material properties of the proof mass (104).

13. A gyroscope (100) as claimed in any of claims 7 to 12, in which the at least one reflector (112) comprises a plurality of reflectors.

14. A gyroscope (100) as claimed in any claim 13, in which the plurality of reflectors span a predetermined radial width, in which the predetermined radial width is associated with a wavelength of at least one of the primary surface acoustic wave (106) or the secondary surface acoustic wave (108).

15. A gyroscope (100) as claimed in any preceding claim, in which the least one actuator (110) comprises at least one group of actuators, with each actuator disposed circumferentially by *2π/n* rad with respect to an adjacent actuator, cooperable to launch the primary surface acoustic wave associated with the primary mode.

16. A gyroscope (100) as claimed in claim 15, in which the at least one actuator (110) comprises at least two groups of actuators, with each group disposed circumferentially by *Zπ/Zn* rad with respect to an adjacent group, cooperable to launch the primary surface acoustic wave (106) of circumferential order n associated with the primary mode.
   *Sensor aspects*

17. A gyroscope (100) as claimed in any preceding claim in which the at least one sensor comprises at least one group of sensors, with each sensor disposed circumferentially by *2π/n* rad with respect to an adjacent sensor, cooperable to detect a characteristic of the primary surface acoustic wave associated with the primary mode.

18. A gyroscope (100) as claimed in any preceding claim in which the at least one sensor comprises at least one group of sensors, with each sensor disposed circumferentially by *2π/n* rad with respect to an adjacent sensor, cooperable to detect a characteristic of the secondary surface acoustic wave (108) associated with the secondary mode.
   *Data processing aspects*

19. A gyroscope (100) as claimed in any preceding claim, comprising circuitry arranged to determine at least angular rate, $\Omega$, from data associated with at least the secondary surface acoustic wave (108).

20. A gyroscope (100) as claimed in claim 19, in which the circuitry to determine at least angular rate, $\Omega$, from at least one or more than one of the amplitude, $A_p$, of the primary surface acoustic wave (106), the amplitude of the secondary surface acoustic wave (108), $A_s$, and a radial width, L , associated with at least one reflector (112) taken jointly and severally in any and all permutations comprises circuitry to determine, $\Omega$, from: $$\Omega = \frac{A_s \omega}{A_p K(n) e^{2sl}}$$ , where

   $A_p$ is the amplitude of the primary surface acoustic wave (106),
   $A_s$ is the amplitude of the secondary surface acoustic wave (108),
   $K(n)$ is the Bryan factor of the proof mass and is determined by the geometrical configuration,
   $S$ is related to the height of the reflector (112) and its elastic properties,
   $l$ is the nondimensional radial width spanned by the at least one reflector (112) corresponding to L,
   $\omega$ is the angular frequency of at least one, or both, of the secondary surface acoustic wave (108) or the primary surface acoustic wave (106), and
   $\Omega$ is said at least angular rate.


**Patentansprüche**

1. Gyroskop (100), umfassend:

   a. eine zyklische symmetrische Prüfmasse (104) um eine Achse (111), die konzentrische kreisförmige Reflektoren umfasst, die einen Hohlraum (202) definieren, um auf einer Hohlraumoberfläche räumlich orthogonale polare primäre und sekundäre Schwingungsmoden zu tragen, die als Reaktion auf Rotation um die Achse (111) der Prüfmasse (104) mit einer gemeinsamen Resonanzfrequenz degenerativ gekoppelt werden;
   b. zumindest einen Aktor (110) zum Induzieren einer primären polaren Oberflächenakustikwelle der Umfangsordnung n assoziiert mit der primären Mode auf der Hohlraumoberfläche; und
   c. zumindest einen Sensor zum Erfassen einer sekundären polaren Oberflächenakustikwelle der Umfangsordnung n assoziiert mit der sekundären Mode auf der Hohlraumoberfläche.

   *Prüfmassenaspekte*

2. Gyroskop (100) nach einem vorhergehenden Anspruch, wobei die Prüfmasse (104) eine vorbestimmte axiale Tiefe (109) aufweist, die zumindest eine vorbestimmte Biegesteifigkeit in einer Richtung der Achse (111) bereitstellt.

3. Gyroskop (100) nach einem vorhergehenden Anspruch, wobei die Prüfmasse (104) auf einem Substrat (113) montiert ist, das eine vorbestimmte axiale Tiefe (109) aufweist, die zumindest eine vorbestimmte Biegesteifigkeit in einer Richtung der Achse (111) bereitstellt.

**4.** Gyroskop (100) nach einem der Ansprüche 1 bis 3, wobei die Prüfmasse (104) kreisförmig ist.

*Wellenaspekte*

**5.** Gyroskop (100) nach einem vorhergehenden Anspruch, wobei der zumindest eine Aktor (110) zum Induzieren der einer primären Oberflächenakustikwelle (106) assoziiert mit der primären Mode angeordnet ist, um eine Raleigh-Oberflächenakustikwelle zu induzieren.

**6.** Gyroskop (100) nach einem vorhergehenden Anspruch, wobei zumindest eine von der primären oder der sekundären Oberflächenakustikwelle (106, 108) eine Standoberflächenakustikwelle bildet.

*Reflektoren*

**7.** Gyroskop (100) nach einem vorhergehenden Anspruch, umfassend zumindest einen Reflektor (112), der dazu angeordnet ist, zumindest die primäre Oberflächenakustikwelle (106) zu reflektieren, um eine Standoberflächenakustikwelle assoziiert mit der primären Mode zu bilden.

**8.** Gyroskop (100) nach Anspruch 7, wobei der zumindest eine Reflektor (112) radial auswärts relativ zu dem zumindest einen Aktor (110) vorgesehen ist, um zumindest die primäre Oberflächenakustikwelle (106) radial einwärts zu reflektieren.

**9.** Gyroskop (100) nach Anspruch 8, wobei der zumindest eine Reflektor (112) radial auswärts relativ zu dem zumindest einen Aktor (110) vorgesehen ist, um zumindest die sekundäre Oberflächenakustikwelle (108) radial einwärts zu reflektieren.

*Reflektoren mit variablen Radien*

**10.** Gyroskop (100) nach einem der Ansprüche 7 bis 9, wobei der zumindest eine Reflektor (112) zumindest einen bogenförmigen Reflektor umfasst.

**11.** Gyroskop (100) nach Anspruch 10, wobei der zumindest eine bogenförmige Reflektor einen variablen Radius umfasst.

**12.** Gyroskop (100) nach Anspruch 11, wobei der variable Radius mit Materialeigenschaften der Prüfmasse (104) variiert.

**13.** Gyroskop (100) nach einem der Ansprüche 7 bis 12, wobei der zumindest eine Reflektor (112) eine Vielzahl von Reflektoren umfasst.

**14.** Gyroskop (100) nach einem Anspruch 13, wobei die Vielzahl von Reflektoren eine vorbestimmte radiale Breite aufspannt, wobei die vorbestimmte radiale Breite mit einer Wellenlänge von zumindest einer von der primären Oberflächenakustikwelle (106) oder der sekundären Oberflächenakustikwelle (108) assoziiert ist.

**15.** Gyroskop (100) nach einem vorhergehenden Anspruch, wobei der zumindest eine Aktor (110) zumindest eine Gruppe von Aktoren umfasst, wobei jeder Aktor umlaufend um $2\pi/n$ rad in Bezug auf einen benachbarten Aktor vorgesehen ist, der zusammenwirkbar ist, um die primäre Oberflächenakustikwelle assoziiert mit der primären Mode zu starten.

**16.** Gyroskop (100) nach Anspruch 15, wobei der zumindest eine Aktor (110) zumindest zwei Gruppen von Aktoren umfasst, wobei jede Gruppe umlaufend um $2\pi/2n$ rad in Bezug auf eine benachbarte Gruppe vorgesehen ist, die zusammenwirkbar ist, um die primäre Oberflächenakustikwelle (106) der Umfangsordnung n assoziiert mit der primären Mode zu starten.

*Sensoraspekte*

**17.** Gyroskop (100) nach einem vorhergehenden Anspruch, wobei der zumindest eine Sensor zumindest eine Gruppe von Sensoren umfasst, wobei jeder Sensor umlaufend um $2\pi/n$ rad in Bezug auf einen benachbarten Sensor vorgesehen ist, der zusammenwirkbar ist, um eine Charakteristik der primären Oberflächenakustikwelle assoziiert mit der primären Mode zu detektieren.

**18.** Gyroskop (100) nach einem vorhergehenden Anspruch, wobei der zumindest eine Sensor zumindest eine Gruppe von Sensoren umfasst, wobei jeder Sensor umlaufend um $2\pi/n$ rad in Bezug auf einen benachbarten Sensor vorgesehen ist, der zusammenwirkbar ist, um eine Charakteristik der sekundären Oberflächenakustikwelle (108) assoziiert mit der sekundären Mode zu detektieren.

*Datenverarbeitungsaspekte*

19. Gyroskop (100) nach einem vorhergehenden Anspruch, umfassend Schaltung, die dazu angeordnet ist, zumindest Winkelrate, $\Omega$, aus Daten assoziiert mit zumindest der sekundären Oberflächenakustikwelle (108) zu bestimmen.

20. Gyroskop (100) nach Anspruch 19, wobei die Schaltung zum Bestimmen von zumindest Winkelrate, $\Omega$, aus zumindest einem oder mehr als einem von der Amplitude, $A_p$, der primären Oberflächenakustikwelle (106), der Amplitude der sekundären Oberflächenakustikwelle (108), $A_s$, und einer radialen Breite, L, assoziiert mit zumindest einem Reflektor (112), der gemeinsam und getrennt in beliebigen und allen Permutationen genommen wird, Schaltung zum Bestimmen, $\Omega$, aus Folgendem umfasst:

$$\Omega = \frac{A_s \omega}{A_p K(n) e^{2sl}}$$ ,

wobei

$A_P$ die Amplitude der primären Oberflächenakustikwelle (106) ist,
$A_S$ die Amplitude der sekundären Oberflächenakustikwelle (108) ist,
$K(n)$ der Bryan-Faktor der Prüfmasse ist und durch die geometrische Konfiguration bestimmt wird,
sich $S$ auf die Höhe des Reflektors (112) und seine elastischen Eigenschaften bezieht,
$l$ die nichtdimensionale radiale Breite aufgespannt durch den zumindest einen Reflektor (112) entsprechend L ist,
$\omega$ die Winkelfrequenz von zumindest einem oder beidem von der sekundären Oberflächenakustikwelle (108) oder der primären Oberflächenakustikwelle (106) ist, und
$\Omega$ die zumindest eine Winkelrate ist.

## Revendications

1. Gyroscope (100) comprenant :

   a. une masse étalon symétrique cyclique (104) autour d'un axe (111) comprenant des réflecteurs circulaires concentriques qui définissent une cavité (202) pour supporter, sur une surface de cavité, des modes de vibration polaires spatialement orthogonaux, primaire et secondaire, qui deviennent couplés de manière dégénérative à une fréquence de résonance partagée en réponse à une rotation autour de l'axe (111) de la masse étalon (104) ;
   b. au moins un actionneur (110) destiné à induire une onde acoustique de surface polaire primaire d'ordre circonférentiel n associée au mode primaire sur la surface de cavité ; et
   c. au moins un capteur destiné à détecter une onde acoustique de surface polaire secondaire d'ordre circonférentiel n associée au mode secondaire sur la surface de cavité.

   *Aspects de la masse étalon*

2. Gyroscope (100) selon l'une quelconque des revendications précédentes, dans lequel la masse étalon (104) comporte une profondeur axiale prédéterminée (109) fournissant au moins une rigidité de flexion prédéterminée dans une direction de l'axe (111).

3. Gyroscope (100) selon l'une quelconque des revendications précédentes, dans lequel la masse étalon (104) est montée sur un substrat (113) qui comporte une profondeur axiale prédéterminée (109) fournissant au moins une rigidité de flexion prédéterminée dans une direction de l'axe (111).

4. Gyroscope (100) selon l'une quelconque des revendications 1 à 3, dans lequel la masse étalon (104) est circulaire.
   *Aspects des ondes*

5. Gyroscope (100) selon l'une quelconque des revendications précédentes, dans lequel l'au moins un actionneur (110) destiné à induire la une onde acoustique de surface primaire (106) associée au mode primaire est agencé pour induire une onde acoustique de surface de Raleigh.

**6.** Gyroscope (100) selon l'une quelconque des revendications précédentes, dans lequel au moins l'une des ondes acoustiques de surface primaire ou secondaire (106, 108) forme une onde acoustique de surface stationnaire.
*Réflecteurs*

**7.** Gyroscope (100) selon l'une quelconque des revendications précédentes, comprenant au moins un réflecteur (112) agencé pour réfléchir au moins l'onde acoustique de surface primaire (106) pour former une onde acoustique de surface stationnaire associée au mode primaire.

**8.** Gyroscope (100) selon la revendication 7, dans lequel l'au moins un réflecteur (112) est disposé radialement vers l'extérieur par rapport à l'au moins un actionneur (110) pour réfléchir au moins l'onde acoustique de surface primaire (106) radialement vers l'intérieur.

**9.** Gyroscope (100) selon la revendication 8, dans lequel l'au moins un réflecteur (112) est disposé radialement vers l'extérieur par rapport à l'au moins un actionneur (110) pour réfléchir au moins l'onde acoustique de surface secondaire (108) radialement vers l'intérieur.
*Réflecteurs à rayons variables*

**10.** Gyroscope (100) selon l'une quelconque des revendications 7 à 9, dans lequel l'au moins un réflecteur (112) comprend au moins un réflecteur arqué.

**11.** Gyroscope (100) selon la revendication 10, dans lequel l'au moins un réflecteur arqué comprend un rayon variable.

**12.** Gyroscope (100) selon la revendication 11, dans lequel le rayon variable varie avec les propriétés matérielles de la masse étalon (104).

**13.** Gyroscope (100) selon l'une quelconque des revendications 7 à 12, dans lequel l'au moins un réflecteur (112) comprend une pluralité de réflecteurs.

**14.** Gyroscope (100) selon l'une quelconque des revendications 13, dans lequel la pluralité de réflecteurs couvrent une largeur radiale prédéterminée, dans lequel la largeur radiale prédéterminée est associée à une longueur d'onde d'au moins l'une de l'onde acoustique de surface primaire (106) ou de l'onde acoustique de surface secondaire (108).

**15.** Gyroscope (100) selon l'une quelconque des revendications précédentes, dans lequel l'au moins un actionneur (110) comprend au moins un groupe d'actionneurs, chaque actionneur étant disposé de manière circonférentielle de $2\pi/n$ rad par rapport à un actionneur adjacent, pouvant coopérer pour lancer l'onde acoustique de surface primaire associée au mode primaire.

**16.** Gyroscope (100) selon la revendication 15, dans lequel l'au moins un actionneur (110) comprend au moins deux groupes d'actionneurs, chaque groupe étant disposé circonférentiellement de $2\pi/2n$ rad par rapport à un groupe adjacent, pouvant coopérer pour lancer l'onde acoustique de surface primaire (106) d'ordre circonférentiel n associée au mode primaire.
*Aspects du capteur*

**17.** Gyroscope (100) selon l'une quelconque des revendications précédentes, dans lequel l'au moins un capteur comprend au moins un groupe de capteurs, chaque capteur étant disposé de manière circonférentielle de $2\pi/n$ rad par rapport à un capteur adjacent, pouvant coopérer pour détecter une caractéristique de l'onde acoustique de surface primaire associée au mode primaire.

**18.** Gyroscope (100) selon l'une quelconque des revendications précédentes, dans lequel l'au moins un capteur comprend au moins un groupe de capteurs, chaque capteur étant disposé circonférentiellement de $2\pi/n$ rad par rapport à un capteur adjacent, pouvant coopérer pour détecter une caractéristique de l'onde acoustique de surface secondaire (108) associée au mode secondaire.
*Aspects du traitement de données*

**19.** Gyroscope (100) selon l'une quelconque des revendications précédentes, comprenant des circuits agencés pour déterminer au moins la vitesse angulaire, $\Omega$, à partir des données associées à au moins l'onde acoustique de surface secondaire (108).

**20.** Gyroscope (100) selon la revendication 19, dans lequel les circuits pour déterminer au moins la vitesse angulaire, $\Omega$, à partir d'au moins l'une ou plusieurs de l'amplitude, $A_p$, de l'onde acoustique de surface primaire (106), de l'amplitude de l'onde acoustique de surface secondaire (108), $A_s$, et d'une largeur radiale, L, associées à au moins un réflecteur (112) pris conjointement et solidairement dans toutes les permutations comprennent des circuits pour déterminer, $\Omega$, à partir de :

$$\Omega = \frac{A_s \omega}{A_p K(n) e^{2sl}}$$

où

$A_p$ est l'amplitude de l'onde acoustique de surface primaire (106),
$A_s$ est l'amplitude de l'onde acoustique de surface secondaire (108),
$K(n)$ est le facteur de Bryan de la masse étalon et est déterminé par la configuration géométrique,
S est lié à la hauteur du réflecteur (112) et à ses propriétés élastiques,
$l$ est la largeur radiale non dimensionnelle couverte par l'au moins un réflecteur (112) correspondant à L,
$\omega$ est la fréquence angulaire d'au moins l'une, ou les deux, de l'onde acoustique de surface secondaire (108) ou de l'onde acoustique de surface primaire (106), et
$\Omega$ est ladite vitesse au moins angulaire.

EP 4 267 914 B1

**100**

**Fig. 1**

Bragg Reflector - showing two
concentric circular irregularities

Fig. 2
200

**300**

**Fig. 3**

Fig. 4

**400**

**Fig. 5**

**500**

n=2
mode 2

Fig. 6
600

n=2
mode 1

Control System

Oscillator circuit and active gain control system — 728

Feedback system — 734

724

726

730 $A_1$  732 $A_2$

T2  T1  T3  T4

714  710

718

104

706  720  716  708

712

702

**Fig. 7**
**700**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOSE K.A. et al.** Surface acoustic wave MEMS gyroscope. *Wave Motion*, 01 April 2002, vol. 36 (4), 367-381